# EUROPÄISCHE PATENTSCHRIFT

(11) **EP 3 000 689 B1**
(45) Veröffentlichungstag und Bekanntmachung des Hinweises auf die Patenterteilung: **04.04.2018**
(21) Anmeldenummer: 15183236.7
(22) Anmeldetag: 01.09.2015
(51) Int. Cl.: B62B 3/06, B62D 51/02, B62D 51/04, B66F 9/075

(54) **HUBWAGEN**
JACK LIFT
CHARIOT ELEVATEUR

(30) Priorität: 29.09.2014 DE 102014114070
(43) Veröffentlichungstag der Anmeldung: 30.03.2016
(73) Patentinhaber: OM Carrelli Elevatori S.p.A., 20020 Lainate (MI) (IT)
(72) Erfinder: Castagnoli, Fabrizio, 46029 Suzzara MI (IT)
(74) Vertreter: Patentship Patentanwaltsgesellschaft mbH

(56) Entgegenhaltungen:
- EP-A1- 2 218 631
- EP-A2- 1 172 285
- DE-A1-102007 017 052
- FR-A1- 2 832 992
- US-A- 3 738 441
- US-A1- 2010 089 703

## Beschreibung

Die Erfindung betrifft einen Hubwagen, insbesondere Niederhubwagen, mit einem einen Fahrantrieb und einen Hubantrieb aufweisenden Antriebsteil und einem Lastgabeln aufweisenden Lastteil, das mittels des Hubantriebs relativ zum Antriebsteil anhebbar und absenkbar ist, wobei der Hubwagen zum wahlweisen Betrieb im Mitgängerbetrieb und im Mitfahrerbetrieb eine klappbare Fahrerstandplattform aufweist, die an dem die Lastgabeln aufweisenden Lastteil angeordnet ist.

Ein gattungsgemäße Hubwagen mit einer klappbaren Fahrerstandplattform, die an dem die Lastgabeln aufweisenden Lastteil angeordnet ist, ist aus der DE 10 2007 017 052 A1 bekannt. Mit einer derartigen klappbaren Fahrerstandplattform im Bereich oberhalb der Lastgabeln des Lastteils kann bei Leerfahrten des Hubwagens mit geringem Bauaufwand und geringen Abmessungen des Hubwagens in Fahrzeuglängsrichtung ein Mitfahrerbetrieb erzielt werden. Im Mitfahrerbetrieb kann hierbei die maximale Fahrgeschwindigkeit gegenüber dem Mitgängerbetrieb erhöht werden. Um sicherzustellen, dass die auf der Fahrerstandplattform stehende Bedienperson bei Kurvenfahrten nicht seitlich von der Fahrerstandplattform stürzt, kann die maximale Fahrgeschwindigkeit im Mitfahrerbetrieb nur geringfügig höher als die maximale Fahrgeschwindigkeit im Mitgängerbetrieb gewählt werden. Sofern im Betrieb des Hubwagens ein hoher Anteil von Leerfahrten, beispielsweise Leerfahrten mit langen Wegstrecken, auftritt, bei denen ein Mitfahrerbetrieb mit der abgeklappten Fahrerstandplattform möglich ist, ergibt sich für den Hubwagen eine begrenzte Umschlagsleistung.

Der vorliegenden Erfindung liegt die Aufgabe zugrunde, einen Hubwagen der eingangs genannten Gattung zur Verfügung zu stellen, der bei einem Betrieb des Hubwagens mit einem hohen Anteil von Leerfahrten eine erhöhte Umschlagsleitung ermöglicht.

Diese Aufgabe wird erfindungsgemäß dadurch gelöst, dass der Hubwagen für den Mitfahrerbetrieb mit klappbaren Seitenbügeln versehen ist, die an dem die Lastgabeln aufweisenden anhebbaren und absenkbaren Lastteil zwischen einer eingeklappten Stellung und einer ausgeklappten Stellung angeordnet sind. Mit derartigen Seitenbügeln wird der im Mitfahrerbetrieb auf der Fahrerstandplattform stehenden Bedienperson ein zusätzlicher seitlicher Halt geboten, wodurch es ermöglicht wird, die maximale Fahrgeschwindigkeit des Hubwagens im Mitfahrerbetrieb gegenüber der maximale Fahrgeschwindigkeit des Hubwagens im Mitgängerbetrieb deutlich anzuheben. Bei einem hohen Anteil von Leerfahrten im Betrieb des Flurförderzeugs, beispielsweise Leerfahrten mit langen Wegstrecken, können die Leerfahrten im Mitfahrerbetrieb bei ausgeklappter Fahrerstandplattform und ausgeklappten Seitenbügeln mit hoher Fahrgeschwindigkeit durchgeführt werden, so dass eine Erhöhung der Umschlagsleitung des Hubwagens erzielt wird.

Gemäß einer vorteilhaften Ausführungsform der Erfindung weist das Lastteil ein Batteriefach auf, in dem ein Batterieblock angeordnet ist, wobei die Seitenbügel an dem Batteriefach klappbar angeordnet sind, derart, dass die Seitenbügel in der ausgeklappten Stellung im Wesentlichen parallel zu den Lastgabeln angeordnet sind und sich mit den freien Enden in Richtung der Spitzen der Lastgabeln erstrecken. Das den Batterieblock aufnehmende Batteriefach ist zum Schutz des Batterieblocks entsprechend stabil ausgeführt, so dass an dem Batteriefach auf einfache Weise und mit geringem zusätzlichen Bauaufwand die klappbaren Seitenbügel befestigt werden können.

Besondere Vorteile ergeben sich, wenn gemäß einer Weiterbildung der Erfindung an dem Batteriefach zumindest eine Ausbuchtung vorgesehen ist, in der sich die Seitenbügel in der eingeklappten Stellung befinden. Hierdurch wird eine vor Beschädigungen geschützte Anordnung der Seitenbügel in der eingeklappten Stellung erzielt. Weiterhin wird hierdurch erzielt, dass sich die Seitenbügel in der eingeklappten Stellung innerhalb der Konturen des Batteriefachs befinden und die Außenabmessungen des Hubwagens nicht vergrößern. Zudem führen hierdurch die eingeklappten Seitenbügel während der Lasthandhabung, beispielsweise der Aufnahme einer Palette mit den Lastgabeln, wobei der Hubwagen im Mitgängerbetrieb betrieben wird, zu keiner Sichtbehinderung der Bedienperson auf die Lastgabeln.

Gemäß einer vorteilhaften Ausführungsform der Erfindung sind die Seitenbügel um eine im Wesentlichen horizontale Schwenkachse an dem Batteriefach zwischen der eingeklappten Stellung und der ausgeklappten Stellung klappbar angeordnet.

Vorteilhafterweise können hierdurch die beiden Seitenbügel auf einfache Weise um die Schwenkachse nach unten in die eingeklappte Stellung für den Mitgängerbetrieb und um die Schwenkachse nach oben in die ausgeklappte Stellung geklappt bzw. verschwenkt werden.

Mit besonderem Vorteil sind die Seitenbügel hierbei jeweils an der Außenseite des Batteriefachs um die horizontale Schwenkachse klappbar angeordnet. Hierdurch können Seitenbügeln, die um eine im Wesentlichen horizontale Schwenkachse schwenkbar angeordnet sind, mit geringem Bauaufwand an dem Batteriefach, innerhalb dem sich der Batterieblock befindet, schwenkbar angeordnet werden.

Vorteilhafterweise sind die Seitenbügel jeweils an der Oberseite des Batteriefachs um die horizontale Schwenkachse klappbar angeordnet. Hierdurch wird erzielt, dass die nach oben ausgeklappten Seitenbügel sich Im Bereich der Oberkante des Batteriefachs befinden, so dass ein sicherer seitlicher Halt für die auf der ausgeklappten Fahrerstandplattform stehende Bedienperson im Mitfahrerbetrieb ermöglicht wird.

Gemäß einer vorteilhaften Ausführungsform der Erfindung sind die Seitenbügel jeweils um eine im Wesentlichen vertikale Schwenkachse an dem Batteriefach zwischen der eingeklappten Stellung und der ausgeklappten Stellung klappbar angeordnet. Vorteilhafterweise können hierdurch die beiden Seitenbügel auf einfache Weise um die jeweilige Schwenkachse nach Innen in die eingeklappte Stellung für den Mitgängerbetrieb und um die jeweilige Schwenkachse nach Außen in die ausgeklappte Stellung geklappt bzw. verschwenkt werden.

Vorteilhafterweise sind die Seitenbügel jeweils an der Oberseite des Batteriefachs um die vertikale Schwenkachse klappbar angeordnet. Hierdurch wird auf einfache Weise erzielt, dass die nach Außen ausgeklappten Seitenbügel sich Im Bereich der Oberkante des Batteriefachs befinden, so dass ein sicherer seitlicher Halt für die auf der ausgeklappten Fahrerstandplattform stehende Bedienperson im Mitfahrerbetrieb ermöglicht wird.

Gemäß einer vorteilhaften Ausgestaltungsform der Erfindung ist eine den Fahrantrieb steuernde elektronische Steuereinrichtung vorgesehen, die mit einer die eingeklappte Stellung und/oder die ausgeklappte Stellung der Seitenbügel erfassenden Sensoreinrichtung in Verbindung steht, wobei die elektronische Steuereinrichtung derart ausgebildet ist, dass in Abhängigkeit von der Stellung der Seitenbügel die maximale Fahrgeschwindigkeit im Mitfahrerbetrieb des Hubwagens veränderbar ist. Hierdurch wird es auf einfache Weise ermöglicht, im Mitfahrerbetrieb des Hubwagens mit eingeklappten Seitenbügeln und im Mitfahrerbetrieb mit ausgeklappten Seitenbügeln unterschiedliche maximale Fahrgeschwindigkeiten des Hubwagens zuzulassen. Für längere Leerfahrten kann somit im Mitfahrerbetrieb bei ausgeklappten Seitenbügeln eine hohe Fahrgeschwindigkeit ermöglicht werden, die eine Umschlagsleitung des Hubwagens ermöglicht.

Die den Fahrantrieb steuernde elektronische Steuereinrichtung steht gemäß einer vorteilhaften Weiterbildung der Erfindung mit Sensoreinrichtungen in Wirkverbindung, die bei ausgeklappten Seitenbügeln das Anlehnen einer Bedienperson erfassen, wobei die elektronische Steuereinrichtung derart ausgebildet ist, dass beim Erfassen eines Anlehnens der Bedienperson an einen der Seitenbügel die Fahrgeschwindigkeit des Hubwagens reduziert oder der Hubwagen in den Stillstand abgebremst wird. Hierdurch kann insbesondere beim Anlehen der Bedienperson an einen ausgeklappten Seitenbügel, beispielsweise aufgrund der auftretenden Kräfte während einer Kurvenfahrt bei hoher Fahrgeschwindigkeit, eine hohe Betriebssicherheit des Hubwagens im Mitfahrerbetrieb erzielt werden. Die Sensoreinrichtungen können hierbei als einfach aufgebaute Schalter ausgebildet sein, die von dem zugeordneten Seitenbügel betätigt wird, wenn sich eine Bedienperson an den Seitenbügel anlehnt.

Gemäß einer vorteilhaften Weiterbildung der Erfindung ist im Bereich der freien Enden der ausgeklappten Seitenbügel ein Rückhaltebügel vorgesehen. Mit einem derartigen, im Rücken der auf der Fahrerstandplattform stehenden Bedienperson angeordneten Rückhaltebügel kann im Mitfahrerbetrieb der Bedienperson eine Anlehnhilfe für die Bedienperson gebildet werden und die Bedienperson gegen ein Umfallen nach Hinten, beispielsweise beim Anfahren des Hubwagens gesichert werden, so dass der Komfort für die Bedienperson im Mitfahrerbetrieb weiter erhöht werden kann und sich eine hohe Betriebssicherheit des Hubwagens im Mitfahrerbetrieb ergibt.

Mit besonderem Vorteil ist gemäß einer Ausgestaltungsform der Erfindung die Fahrerstandplattform in der ausgeklappten Stellung mittels einer Feder- und/oder Dämpfereinrichtung an dem Lastteil abgestützt. Aufgrund der hohen maximalen Fahrgeschwindigkeit des Hubwagens im Mitfahrerbetrieb mit ausgeklappten Seitenbügeln können sich starke Stöße aus Fahrbahnunebenheiten und hohe Vibrationen ergeben. Sofern die Fahrerstandplattform in der ausgeklappten Stellung mittels einer Feder- und/oder Dämpfereinrichtung an dem Lastteil gefedert und/oder gedämpft angeordnet ist, ergibt sich für auf der ausgeklappten Fahrerstandplattform stehende Bedienperson auch bei hohen Fahrgeschwindigkeiten im Mitfahrerbetrieb mit ausgeklappten Seitenbügeln eine geringe Belastung durch Stöße und Vibrationen, so dass ein Mitfahrerbetrieb mit hoher maximaler Fahrgeschwindigkeit bei hohem Komfort für die Bedienperson erzielbar ist.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Hubwagens in einer perspektivischen Darstellung und
- Figur 2: eine zweite Ausführungsform eines erfindungsgemäßen Hubwagens in einer perspektivischen Darstellung.

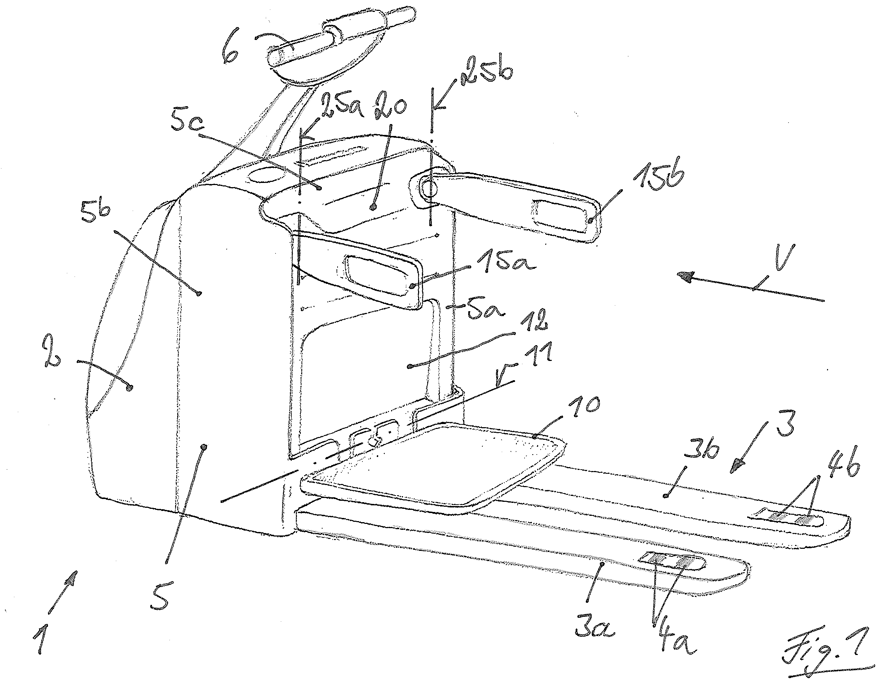

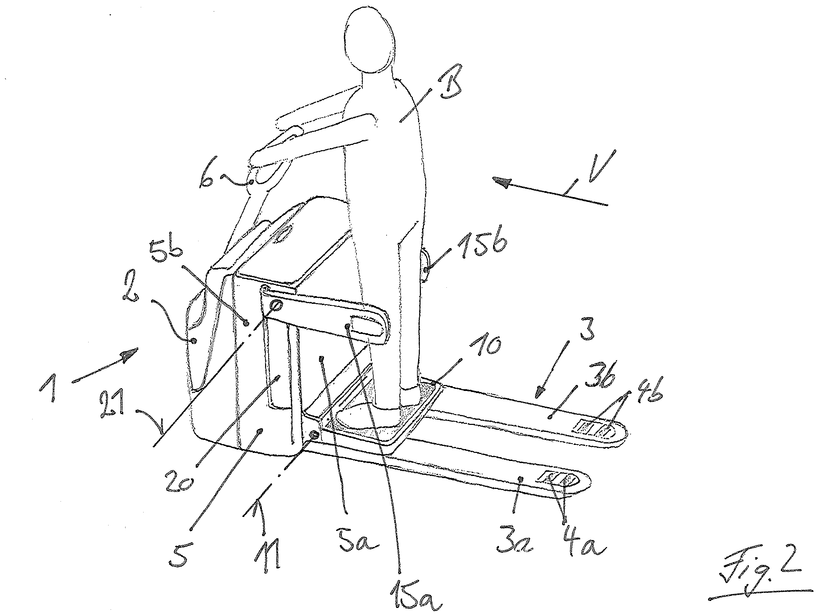

In den Figuren 1 und 2 sind als Niederhubwagen ausgebildete erfindungsgemäße Hubwagen 1 dargestellt, die einen Mitgängerbetrieb und einen Mitfahrerbetrieb ermöglichen. Gleiche Bauteile sind hierbei mit gleichen Bezugsziffern versehen.

Der Hubwagen 1 gemäß den Figuren 1 und 2 weist einen Antriebsteil 2 und einen relativ zum Antriebsteil 2 anhebbaren und absenkbaren Lastteil 3 auf.

In dem Antriebsteil 2 ist ein nicht näher dargestellter Fahrantrieb angeordnet, der mit einem nicht mehr gezeigten Antriebsrad zu dessen Antrieb in Wirkverbindung steht. Mit dem Antriebsrad stützt sich der Hubwagen 1 im Bereich des Antriebsteils 2 auf einer Fahrbahn ab. Das Antriebsrad ist lenkbar im Antriebsteil 2 angeordnet. In dem Antriebsteil 2 ist weiterhin ein nicht näher dargestellter Hubantrieb angeordnet, mit dem das Lastteil 3 relativ zu dem Antriebsteil 1 angehoben und abgesenkt werden kann.

In Fahrzeuglängsrichtung des Hubwagens 1 schließt sich an den Antriebsteil 2 der anhebbare und absenkbare Lastteil 3 an. Der Lastteil 3 umfasst zwei in Fahrzeugquerrichtung seitlich beabstandete Lastgabeln 3a, 3b. An den Spitzen der Lastgabeln 3a, 3b ist jeweils zumindest eine Lastrolle 4a, 4b angeordnet, mittels denen der Hubwagen 1 im Bereich des Lastteils 3 auf der Fahrbahn abgestützt ist. Der Lastteil 3 ist mit einem benachbart zum Antriebsteil 2 angeordneten Batteriefach 5 versehen, in dem ein nicht näher dargestellter Batterieblock angeordnet werden kann, der den Fahrantrieb und den Hubantrieb mit elektrischer Energie versorgt.

Die Steuerung des Hubwagens 1 durch die Bedienperson erfolgt über eine Lenkdeichsel 6, die am Antriebsteil 1 angeordnet ist. Die Lenkdeichsel 6 ist mit Bedienelementen zur Steuerung des Hubwagens versehen, beispielsweise einem den Fahrantrieb des Hubwagens 1 steuernden Fahrschalter und einen den Hubantrieb steuernde Heben- bzw. Senkenschalter. Gelenkt wird der Hubwagen 1, indem die Lenkdeichsel 6 um eine im Wesentlichen vertikale Achse relativ zum Antriebsteil 2 geschwenkt wird. Diese Lenkbewegung die Lenkdeichsel 6 wird mechanisch oder elektrisch auf das lenkbare Antriebsrad übertragen.

Der Hubwagen 1 ist zum wahlweisen Betrieb im Mitgängerbetrieb und im Mitfahrerbetrieb ausgebildet und für den Mitfahrerbetrieb mit einer klappbaren Fahrerstandplattform 10 versehen, die an dem die Lastgabeln 3a, 3b aufweisenden Lastteil 3 klappbar angeordnet ist. Die klappbare Fahrerstandplattform 11 ist in den dargestellten Ausführungsbeispielen hierzu am Lastteil 3 im Bereich des Batteriefaches 5 klappbar angeordnet. Die Fahrerstandplattform 10 ist hierbei um eine quer zur Fahrzeuglängsachse des Hubwagens 1 angeordnete und im Wesentlichen horizontale Schwenkachse 11 schwenkbar im Bereich des Batteriefaches 5 am Lastteil 3 zwischen einer eingeklappten Stellung und einer ausgeklappten Stellung angeordnet.

In der eingeklappten Stellung befindet sich die Fahrerstandplattform 10 in einer senkrecht stehenden Position parallel zu einer den Lastgabeln 3a, 3b zugewandten Rückwand 5a des Batteriefachs 5, um mit den Lastgabeln 3a, 3b eine Palette handhaben zu können.

Wie in der Figur 1 dargestellt ist, kann in der Rückwand 5a des Batteriefachs 5 eine Ausbuchtung 12 ausgebildet sind, in die die Fahrerstandplattform 10 in der eingeklappten Stellung angeordnet ist, so dass sich die eingeklappte Fahrerstandplattform 10 innerhalb der Kontur des Batteriefachs 5 befindet.

Für den Mitgängerbetrieb des Hubwagens 1 befindet sich die Fahrerstandplattform 10 in der nach oben eingeklappten Stellung. Eine Bedienperson B kann hierbei neben oder vor dem Hubwagen 1 hergehen und den Hubwagen 1 mittels der an der Lenkdeichsel 6 angeordneten Bedienelementen bedienen.

In den Figuren 1 und 2 befindet sich die Fahrerstandplattform 10 in einer nach unten ausgeklappten Stellung für den Mitfahrerbetrieb des Hubwagens 1, in der sich die Fahrerplattform 10 mit einer Standfläche für die Bedienperson B oberhalb der Lastgabeln 3a, 3b befindet. Im Mitfahrerbetrieb kann die auf der Standfläche der Fahrerstandplattform 10 stehende Bedienperson an der Lenkdeichsel 6 den Fahrantrieb steuern und mittels der Lenkdeichsel 6 lenken. Im Mitfahrbetrieb des Hubwagens 1 befindet sich die Bedienperson B mit Blickrichtung auf die Lenkdeichsel 6 auf der Fahrerstandplattform 10, so dass die Blickrichtung der Bedienperson B der Vorwärtsfahrtrichtung V des Hubwagens 1 entspricht.

Erfindungsgemäß ist der Hubwagen 1 für den Mitfahrerbetrieb weiterhin mit zwei klappbaren Seitenbügeln 15a, 15b versehen, die an dem die Lastgabeln 3a, 3b aufweisenden Lastteil 3 zwischen einer eingeklappten Stellung und einer ausgeklappten Stellung klappbar angeordnet sind. Die beiden Seitenbügel 15a, 15b sind der Fahrerstandplattform 10 zugeordnet.

In den Figuren 1 und 2 befinden sich die Seitenbügel 15a, 15b in der ausgeklappten Stellung für den Mitfahrerbetrieb des Hubwagens 1. Für den Mitgängerbetrieb des Hubwagens sind die Seitenbügel 15a, 15b in eine eingeklappte Stellung zu klappen bzw. zu schwenken.

Die Seitenbügel 15a, 15b geben im Mitfahrerbetrieb des Hubwagens 1 in der ausgeklappten Stellung - wie in der Figur 2 dargestellt ist - der auf der ausgeklappten Fahrerstandplattform 10 stehenden Bedienperson B in seitlicher Richtung zusätzlichen Halt.

Die Seitenbügel 15a, 15b sind in den dargestellten Ausführungsbeispielen am Lastteil 3 im Bereich des Batteriefaches 5 klappbar angeordnet. In der ausgeklappten Stellung sind die beiden Seitenbügel 15a, 15b im Wesentlichen parallel zu den Lastgabeln 3a, 3b angeordnet und erstrecken sich von dem Batteriefach 5 weg mit einem freien Ende jeweils in Richtung der Spitzen der Lastgabeln 3a, 3b.

An dem Lastteil 3, bevorzugt am Batteriefach 5, ist zumindest eine Ausbuchtung 20 angeordnet, in der sich die Seitenbügel 15a, 15b in der eingeklappten Stellung befinden, so dass sich die Seitenbügel 15a, 15b in der eingeklappten Stellung innerhalb der Kontur des Batteriefachs 5 befinden.

In dem Ausführungsbeispiel der Figur 1 sind die Seitenbügel 15a, 15b jeweils um eine im Wesentlichen vertikale Schwenkachse 25a, 25b im Bereich des Batteriefaches 5 an dem Lastteil 3 zwischen der eingeklappten Stellung und der ausgeklappten Stellung klappbar angeordnet. Die Seitenbügel 15a, 15b sind jeweils an der Oberseite des Batteriefachs 5 um die vertikale Schwenkachse 25a, 25b klappbar angeordnet. Die vertikalen Schwenkachsen 25a, 25b sind im Bereich der Außenseiten des Batteriefachs 5 angeordnet, so dass die Seitenbügel 15a, 15b nach Innen in die eingeklappte Stellung geklappt bzw. verschwenkt werden können. An einer oberen Abdeckung 5c des Batteriefachs 5 ist an dem zur Rückwand 5a des Batteriefachs 5 übergehenden Eckbereich die Ausbuchtung 20 ausgebildet, in die die beiden Seitenbügel 15a, 15b nach Innen eingeklappt werden können, um sich in der eingeklappten Stellung innerhalb der Kontur des Batteriefachs 5 zu befinden.

In dem Ausführungsbeispiel der Figur 2 sind die Seitenbügel 15a, 15b um eine quer zur Fahrzeuglängsachse des Hubwagens 1 angeordnete und im Wesentlichen horizontale Schwenkachse 21 schwenkbar im Bereich des Batteriefaches 5 am Lastteil 3 zwischen einer eingeklappten Stellung und einer ausgeklappten Stellung angeordnet. Die horizontale Schwenkachse 21 der Seitenbügel 15a, 15b ist im vertikal oberen Bereich des Batteriefachs 5 angeordnet, so dass die Seitenbügel 15a, 15b jeweils an der Oberseite des Batteriefachs 5 um die horizontale Schwenkachse 21 klappbar angeordnet sind.

In der Figur 2 sind die Seitenbügel 15a, 15b jeweils an der Außenseite des Batteriefachs 5 um die horizontale Schwenkachse 21 klappbar angeordnet. An den Seitenwänden 5b des Batteriefachs 5 ist jeweils eine Ausbuchtung 20 angeordnet, in die der entsprechende Seitenbügel 15a, 15b in der nach unten eingeklappten Stellung eingeklappt werden kann, um sich in der eingeklappten Stellung innerhalb der Kontur des Batteriefachs 5 zu befinden.

Eine nicht näher dargestellte elektronische Steuereinrichtung, die den Fahrantrieb steuert, erfasst mittels einer geeigneten Sensoreinrichtung die eingeklappte Stellung und/oder die ausgeklappte Stellung der beiden Seitenbügel 15a, 15b. Die elektronische Steuereinrichtung ist derart ausgebildet, dass in Abhängigkeit von der Stellung der Seitenbügel 15a, 15b die maximale Fahrgeschwindigkeit im Mitfahrerbetrieb des Hubwagens 1 veränderbar ist. Befindet sich für den Mitfahrerbetrieb nur die Fahrerstandplattform 10 in der ausgeklappten Stellung und die beiden Seitenbügel 15a, 15b sind eingeklappt, begrenzt die elektronische Steuereinrichtung die maximale Fahrgeschwindigkeit des Hubwagens 1 im Mitfahrerbetrieb auf einen ersten Grenzwert. Der erste Grenzwert im Mitfahrerbetrieb ist bevorzugt höher als ein Grenzwert für die maximale Fahrgeschwindigkeit des Hubwagens 1 im Mitgängerbetrieb bei eingeklappter Fahrerstandplattform 10 und eingeklappten Seitenbügeln 15a, 15b. Befinden sich für den Mitfahrerbetrieb - wie in den Figuren 1 und 2 dargestellt ist - die Fahrerstandplattform 10 in der ausgeklappten Stellung und die beiden Seitenbügel 15a, 15b ebenfalls in der ausgeklappten Stellung, begrenzt die elektronische Steuereinrichtung die maximale Fahrgeschwindigkeit des Hubwagens 1 im Mitfahrerbetrieb auf einen zweiten Grenzwert, der höher als der erste Grenzwert ist.

Weiterhin kann die elektronische Steuereinrichtung mit Sensoreinrichtungen in Wirkverbindung stehen, die bei ausgeklappten Seitenbügeln 15a, 15b das Anlehnen der Bedienperson B an dem entsprechenden Seitenbügel 15a, 15b erfassen, beispielsweise während einer Kurvenfahrt des Hubwagens 1. Die elektronische Steuereinrichtung ist hierbei derart ausgebildet, dass beim Erfassen eines Anlehnens der Bedienperson B an einen der Seitenbügel 15a, 15b die Fahrgeschwindigkeit des Hubwagens 1 reduziert wird oder der Hubwagen 1 in den Stillstand abgebremst wird.

Weiterhin kann im Bereich der freien Enden der ausgeklappten Seitenbügel 15a, 15b ein nicht näher dargestellter Rückhaltebügel vorgesehen sein, der im Mitfahrerbetrieb bei ausgeklappten Seitenbügeln 15a, 15b der auf der Fahrerstandplattform 10 stehenden Bedienperson B nach Hinten in Richtung der Spitzen der Lastgabeln 3a, 3b einen zusätzlichen Halt bietet, beispielsweise beim Anfahren des Hubwagens 1 in Vorwärtsfahrtrichtung V.

Die Fahrerstandplattform 10 kann in der ausgeklappten Stellung für den Mitfahrerbetrieb mittels einer Feder- und/oder Dämpfereinrichtung an dem Lastteil 3 abgestützt sein, um einen verbesserten Komfort für die Bedienperson B im Mitfahrerbetrieb des Hubwagens 1 bei der erhöhten maximalen Fahrgeschwindigkeiten zu erzielen.

Der erfindungsgemäße Hubwagen 1 ermöglicht im Mitgängerbetrieb, wobei sich die die Fahrerstandplattform 10 und die beiden Seitenbügel 15a, 15b in der eingeklappten Stellung befinden, die Lasthandhabung einer Last mit den Lastgabeln 3a, 3b. Sofern mit dem Hubwagen 1 keine Last gehandhabt werden soll, beispielsweise für eine Leerfahrt über eine längere Wegstrecke, kann durch Ausklappen der Fahrerstandplattform 10 sowie Ausklappen der Seitenbügel 15a, 15b ein sicherer Mitfahrerbetrieb ermöglicht werden, bei dem der Hubwagen 1 mit einer erhöhten maximalen Fahrgeschwindigkeiten betrieben werden kann und somit eine hohe Umschlagsleitung des Hubwagens 1 erzielt wird.

## Patentansprüche

1. Hubwagen (1), insbesondere Niederhubwagen, mit einem einen Fahrantrieb und einen Hubantrieb aufweisenden Antriebsteil (2) und einem Lastgabeln (3a; 3b) aufweisenden Lastteil (3), das mittels des Hubantriebs relativ zum Antriebsteil (2) anhebbar und absenkbar ist, wobei der Hubwagen (1) zum wahlweisen Betrieb im Mitgängerbetrieb und im Mitfahrerbetrieb eine klappbare Fahrerstandplattform (10) aufweist, die an dem die Lastgabeln (3a; 3b) aufweisenden Lastteil (3) angeordnet ist, **dadurch gekennzeichnet, dass** der Hubwagen (1) für den Mitfahrerbetrieb mit klappbaren Seitenbügeln (15a, 15b) versehen ist, die an dem die Lastgabeln (3a; 3b) aufweisenden anhebbaren und absenkbaren Lastteil (3) zwischen einer eingeklappten Stellung und einer ausgeklappten Stellung angeordnet sind.

2. Hubwagen (1) nach Anspruch 1, **dadurch gekennzeichnet, dass** das Lastteil (3) ein Batteriefach (5) aufweist, in dem ein Batterieblock angeordnet ist, wobei die Seitenbügel (15a, 15b) an dem Batteriefach (5) klappbar angeordnet sind, derart, dass die Seitenbügel (15a, 15b) in der ausgeklappten Stellung im Wesentlichen parallel zu den Lastgabeln (3a, 3b) angeordnet sind und sich mit den freien Enden in Richtung der Spitzen der Lastgabeln (3a, 3b) erstrecken.

3. Hubwagen (1) nach Anspruch 2, **dadurch gekennzeichnet, dass** an dem Batteriefach (5) zumindest eine Ausbuchtung (20) vorgesehen ist, in der sich die Seitenbügel (15a, 15b) in der eingeklappten Stellung befinden.

4. Hubwagen (1) nach Anspruch 2 oder 3, **dadurch gekennzeichnet, dass** die Seitenbügel (15a, 15b) um eine im Wesentlichen horizontale Schwenkachse (21) an dem Batteriefach (5) zwischen der eingeklappten Stellung und der ausgeklappten Stellung klappbar angeordnet sind.

5. Hubwagen (1) nach Anspruch 4, **dadurch gekennzeichnet, dass** die Seitenbügel (15a, 15b) jeweils an der Außenseite des Batteriefachs (5) um die horizontale Schwenkachse (21) klappbar angeordnet sind.

6. Hubwagen (1) nach Anspruch 4 oder 5, **dadurch gekennzeichnet, dass** die Seitenbügel (15a, 15b) jeweils an der Oberseite des Batteriefachs (5) um die horizontale Schwenkachse (21) klappbar angeordnet sind.

7. Hubwagen (1) nach Anspruch 2 oder 3, **dadurch gekennzeichnet, dass** die Seitenbügel (15a, 5b) jeweils um eine im Wesentlichen vertikale Schwenkachse (25a, 25b) an dem Batteriefach (5) zwischen der eingeklappten Stellung und der ausgeklappten Stellung klappbar angeordnet sind.

8. Hubwagen (1) nach Anspruch 7, **dadurch gekennzeichnet, dass** die Seitenbügel (15a, 15b) jeweils an der Oberseite des Batteriefachs (5) um die vertikale Schwenkachse (25a, 25b) klappbar angeordnet sind.

9. Hubwagen (1) nach einem der Ansprüche 1 bis 8, **dadurch gekennzeichnet, dass** eine den Fahrantrieb steuernde elektronische Steuereinrichtung vorgesehen ist, die mit einer die eingeklappte Stellung und/oder die ausgeklappte Stellung der Seitenbügel (15a, 15b) erfassenden Sensoreinrichtung in Verbindung steht, wobei die elektronische Steuereinrichtung derart ausgebildet ist, dass in Abhängigkeit von der Stellung der Seitenbügel (15a, 15b) die maximale Fahrgeschwindigkeit im Mitfahrerbetrieb des Hubwagens (1) veränderbar ist.

10. Hubwagen (1) nach einem der Ansprüche 1 bis 9, **dadurch gekennzeichnet, dass** eine den Fahrantrieb steuernde elektronische Steuereinrichtung vorgesehen ist, die mit Sensoreinrichtungen in Wirkverbindung steht, die bei ausgeklappten Seitenbügeln (15a, 15b) das Anlehnen einer Bedienperson erfassen, wobei die elektronische Steuereinrichtung derart ausgebildet ist, dass beim Erfassen eines Anlehnens der Bedienperson an einen der Seitenbügel (15a; 15b) die Fahrgeschwindigkeit des Hubwagens (1) reduziert oder der Hubwagen (1) in den Stillstand abgebremst wird.

11. Hubwagen (1) nach einem der Ansprüche 1 bis 10, **dadurch gekennzeichnet, dass** im Bereich der freien Enden der ausgeklappten Seitenbügel (15a, 15b) ein Rückhaltebügel vorgesehen ist.

12. Hubwagen (1) nach einem der Ansprüche 1 bis 11, **dadurch gekennzeichnet, dass** die Fahrerstandplattform (10) in der ausgeklappten Stellung mittels einer Feder- und/oder Dämpfereinrichtung an dem Lastteil (3) abgestützt ist.

## Claims

1. Pallet truck (1), in particular low-lift truck, with a drive part (2), which has a travel drive and a lift drive, and a load part (3) having load forks (3a; 3b), which load part (3) can be raised and lowered by means of the lift drive relative to the drive part (2), wherein the pallet truck (1) has a folding driver's stand-on platform (10) for selective operation in pedestrian operation and in stand-on operation, which platform (10) is arranged on the load part (3) having the load forks (3a; 3b), **characterized in that** the pallet truck (1) is provided with foldable side bars (15a, 15b) for stand-on operation, which side bars (15a, 15b) are arranged on the raisable and lowerable load part (3), which has load forks (3a; 3b), between a folded-in position and a folded-out position.

2. Pallet truck (1) according to Claim 1, **characterised in that** the load part (3) has a battery compartment (5) in which a battery block is arranged, wherein the side bars (15a, 15b) are arranged foldable on the battery compartment (5) in such a manner that the side bars (15a, 15b) are arranged in the folded-out position essentially parallel to the load forks (3a, 3b) and extend with the free ends in the direction of the tips of the load forks (3a, 3b).

3. Pallet truck (1) according to Claim 2, **characterised in that** at least one bulge (20) is provided on the battery compartment (5), in which bulge (20) the side bars (15a, 15b) are located in the folded-in position.

4. Pallet truck (1) according to Claim 2 or 3, **characterised in that** the side bars (15a, 15b) are arranged foldable about an essentially horizontal pivot axis (21) on the battery compartment (5) between the folded-in position and the folded-out position.

5. Pallet truck (1) according to Claim 4, **characterised in that** the side bars (15a, 5b) are arranged in each case on the outer side of the battery compartment (5) foldable about the horizontal pivot axis (21).

6. Pallet truck (1) according to Claim 4 or 5, **characterised in that** the side bars (15a, 15b) are arranged in each case on the upper side of the battery compartment (5) foldable about the horizontal pivot axis (21).

7. Pallet truck (1) according to Claim 2 or 3, **characterised in that** the side bars (15a, 5b) are arranged in each case foldable about an essentially vertical pivot axis (25a, 25b) on the battery compartment (5) between the folded-in position and the folded-out position.

8. Pallet truck (1) according to Claim 7, **characterised in that** the side bars (15a, 15b) are arranged in each case on the upper side of the battery compartment (5) foldable about the vertical pivot axis (25a, 25b).

9. Pallet truck (1) according to one of Claims 1 to 8, **characterised in that** an electronic control unit which controls the travel drive is provided, which control unit is connected to a sensor unit which detects the folded-in position and/or the folded-out position of the side bars (15a, 15b), wherein the electronic control unit is formed in such a manner that the maximum driving speed in stand-on operation of the pallet truck (1) can be changed as a function of the position of the side bars (15a, 15b).

10. Pallet truck (1) according to one of Claims 1 to 9, **characterised in that** an electronic control unit which controls the travel drive is provided, which control unit is operatively connected to sensor units which, in the case of folded-out side bars (15a, 15b), detects the leaning-on of an operator, wherein the electronic control unit is formed in such a manner that, in the event of detection of the operator leaning on one of the side bars (15a; 15b), the driving speed of the pallet truck (1) is reduced or the pallet truck (1) is braked to a standstill.

11. Pallet truck (1) according to one of Claims 1 to 10, **characterised in that** a retention bar is provided in the region of the free ends of the folded-out side bars (15a, 15b).

12. Pallet truck (1) according to one of Claims 1 to 11, **characterised in that** the driver's stand-on platform (10) is supported on the load part (3) in the folded-out position by means of a spring and/or damper unit.

## Revendications

1. Chariot élévateur (1), en particulier transpalette, avec une partie d'entraînement (2) présentant un entraînement de roulage et un entraînement de levage et avec une partie de chargement (3) présentant des fourches de chargement (3a; 3b), qui peut être élevée et abaissée par rapport à la partie d'entraînement (2) au moyen de l'entraînement de levage, dans lequel le chariot élévateur (1) présente pour le fonctionnement au choix en mode accompagné et en mode embarqué une plate-forme de conducteur rabattable (10), qui est disposée sur la partie de chargement (3) présentant les fourches de chargement (3a; 3b), **caractérisé en ce que** le chariot élévateur (1) est muni pour le mode accompagné d'étriers latéraux rabattables (15a, 15b), qui sont disposés sur la partie de chargement qui peut être élevée et abaissée (3) présentant les fourches de chargement (3a; 3b) entre une position rabattue et une position déployée.

2. Chariot élévateur (1) selon la revendication 1, **caractérisé en ce que** la partie de chargement (3) présente un compartiment de batterie (5), dans lequel un bloc de batterie est disposé, dans lequel les étriers latéraux (15a, 15b) sont agencés de façon rabattable sur le compartiment de batterie (5), de telle manière que les étriers latéraux (15a, 15b) dans la position déployée soient essentiellement parallèles aux fourches de chargement (15a, 15b) et s'étendent avec leurs extrémités libres en direction des pointes des fourches de chargement (3a, 3b).

3. Chariot élévateur (1) selon la revendication 2, **caractérisé en ce qu'**il est prévu sur le compartiment de batterie (5) au moins un creux (20), dans lequel les étriers latéraux (15a, 15b) se trouvent dans la position rabattue.

4. Chariot élévateur (1) selon la revendication 2 ou 3, **caractérisé en ce que** les étriers latéraux (15a, 15b) sont agencés de façon pivotante autour d'un axe de pivotement essentiellement horizontal (21) sur le compartiment de batterie (5) entre la position rabattue et la position déployée.

5. Chariot élévateur (1) selon la revendication 4, **caractérisé en ce que** les étriers latéraux (15a, 15b) sont agencés de façon pivotante autour de l'axe de pivotement horizontal (21) respectivement sur le côté extérieur du compartiment de batterie (5).

6. Chariot élévateur (1) selon la revendication 4 ou 5, **caractérisé en ce que** les étriers latéraux (15a, 15b) sont agencés de façon pivotante autour de l'axe de pivotement horizontal (21) respectivement sur le côté supérieur du compartiment de batterie (5).

7. Chariot élévateur (1) selon la revendication 2 ou 3, **caractérisé en ce que** les étriers latéraux (15a, 5b) sont agencés de façon pivotante respectivement autour d'un axe de pivotement essentiellement vertical (25a, 25b) sur le compartiment de batterie (5) entre la position rabattue et la position déployée.

8. Chariot élévateur (1) selon la revendication 7, **caractérisé en ce que** les étriers latéraux (15a, 15b) sont agencés de façon pivotante autour de l'axe de pivotement vertical (25a, 25b) respectivement sur le côté supérieur du compartiment de batterie (5).

9. Chariot élévateur (1) selon l'une quelconque des revendications 1 à 8, **caractérisé en ce qu'**il est prévu un dispositif de commande électronique commandant l'entraînement de roulage, qui est en liaison avec un dispositif de capteur détectant la position rabattue et/ou la position déployée des étriers latéraux (15a, 15b), dans lequel le dispositif de commande électronique est configuré de telle manière que la vitesse de roulage maximale en mode embarqué du chariot élévateur (1) puisse être modifiée en fonction de la position des étriers latéraux (15a, 15b).

10. Chariot élévateur (1) selon l'une quelconque des revendications 1 à 9, **caractérisé en ce qu'**il est prévu un dispositif de commande électronique commandant l'entraînement de roulage, qui est en liaison active avec des dispositifs de capteurs, qui détectent l'appui d'un opérateur lorsque les étriers latéraux (15a, 15b) sont déployés, dans lequel le dispositif de commande électronique est configuré de telle manière que lors de la détection d'un appui de l'opérateur sur un des étriers latéraux (15a, 15b), la vitesse de roulage du chariot élévateur (1) soit réduite ou que le chariot élévateur (1) soit freiné jusqu'à l'arrêt.

11. Chariot élévateur (1) selon l'une quelconque des revendications 1 à 10, **caractérisé en ce qu'**il est prévu un étrier de retenue dans la région des extrémités des étriers latéraux déployés (15a, 15b).

12. Chariot élévateur (1) selon l'une quelconque des revendications 1 à 11, **caractérisé en ce que** la plate-forme de conducteur (10) dans la position déployée est soutenue sur la partie de chargement (3) au moyen d'un dispositif de suspension et/ou d'amortissement.
